# EUROPEAN PATENT APPLICATION

(11) **EP 3 035 653 A1**
(43) Date of publication of application: **22.06.2016**
(21) Application number: 15195045.8
(22) Date of filing: 17.11.2015
(51) Int. Cl.: H04M 1/725, H04W 72/02, G10K 11/178, G10L 21/02, G10L 19/00

(54) **COMMUNICATION DEVICE**

(30) Priority: 18.12.2014 JP 2014256738
(71) Applicant: FUJITSU LIMITED, Kawasaki-shi, Kanagawa 211-8588 (JP)
(72) Inventor: YAMADA, Yuichi, Kawasaki-shi, Kanagawa 211-8588 (JP)
(74) Representative: Hutchison, James

(57) **Abstract**

A communication device is configured to work in accordance with a time domain multiple access communication method, the communication device includes: a controller configured to perform control of generating a communication burst signal obtained by allocating a transmission signal in a burst state at a first output level into a first slot allocated in a frame to be transmitted, generating a current compensation burst signal allocated into a second slot adjacent to the first slot, having a second output level lower than the first output level and including information that is not related to communication of the communication device, and switching an antenna according to periods of the first slot and the second slot.

## Description

### FIELD

The embodiments discussed herein are related to a communication device using a time domain multiple access (TDMA) communication method.

### BACKGROUND

There are communication devices, such as mobile phone terminals, and the like, which use a TDMA communication method in accordance with a Global Systems for Mobile Communication, which will be hereinafter referred to as "GSM (registered trademark)", or the like. Such a communication device communicates coded information with a base station, and transmits, as a burst signal, communication information, such as voice information, control information, and the like, at a predetermined carrier frequency, using a slot allocated during a frame period that has been determined in advance. The carrier frequency is a radio frequency that is different from an audible frequency.

In transmission of the burst signal, the communication device causes noise interference (which will be hereinafter referred to as "burst noise") in which a frame frequency (for example, 217 Hz) is a basic frequency. The burst noise has a frequency in an audible frequency range, a transmission current changes in transmitting the burst signal, so that an inductive magnetic field is generated in a coil of the communication device (for example, a transmission circuit), and thus, burst noise is emitted to the outside of the communication device. The burst noise interferes a communication signal between communications devices, that is, for example, a communication device and a hearing aid, and gives audible noise in an audible frequency range of a user of the hearing aid. Some hearing aids have, in addition to an amplification mode of a voice signal, a mode (a telecoil mode: a T-mode) in which a magnetic signal of the inductive magnetic field transmitted by the communication device or the like is detected by a reception coil and voice conversion is performed thereon. Burst noise of a magnetic component interferes a magnetic signal communicated between the communication device and the hearing aid which are used in the T-mode.

As an output level of the burst signal increases due to a change of a communication state, such as, for example, an increase in distance from the base station and the like, the communication device causes a drastic current change in a coil or the like, and emits large burst noise to the outside. As burst noise increases, audible noise of the hearing aid increases.

There is a technique in which, in order to reduce the above-described interference, a communication device transmits an interference compensation signal modulated at a frequency (a compensation frequency) other than a transmission frequency allocated by a base station in a previous or subsequent slot before or after a transmission slot in which the communication device transmits a burst signal (see, for example, Japanese Laid-open Patent Publication No. 10-336132). In this technique, a current change in a coil is made moderate and burst noise is reduced by transmitting a low power interference compensation signal in an adjacent slot to a burst signal.

### SUMMARY

This invention is defined by the claims, to which reference should now be made.

Accordingly, it is desirable in one aspect of the invention to reduce interference to communication of another communication device in a simple manner.

According to an embodiment of one aspect of the invention, a communication device is configured to work in accordance with a time domain multiple access communication method, the communication device includes: a controller configured to perform control of generating a communication burst signal obtained by allocating a transmission signal in a burst state at a first output level into a first slot allocated in a frame to be transmitted, generating a current compensation burst signal allocated into a second slot adjacent to the first slot, having a second output level lower than the first output level and including information that is not related to communication of the communication device, and switching an antenna according to periods of the first slot and the second slot.

### BRIEF DESCRIPTION OF DRAWINGS

Embodiments of the invention are set out, by way of example only, with reference to the following drawings, in which:
FIG. 1 is a configuration diagram illustrating a communication device according to a first embodiment;
FIG. 2 is a diagram illustrating a communication mode between the communication device according to the first embodiment and a hearing aid;
FIG. 3 is a diagram illustrating a communication burst signal transmitted by the communication device according to the first embodiment;
FIG. 4 is a diagram illustrating an example of a current compensation burst signal transmitted by the communication device according to the first embodiment;
FIG. 5 is a diagram illustrating another example of a current compensation burst signal transmitted by the communication device according to the first embodiment;
FIG. 6 is a table illustrating an example of combinations of the number of slots and an output level of a current compensation burst signal transmitted by the communication device according to the first embodiment;
FIG. 7 is a table illustrating an example of output control of a current compensation burst signal for each use condition, which is performed by the communication device according to the first embodiment;
FIG. 8 is a flow chart illustrating an example of control processing of controlling output of a current compensation burst signal, which is performed by the communication device according to the first embodiment; and
FIG. 9 is a flow chart illustrating an example of control processing of controlling output of a current compensation burst signal, which is performed by a communication device according to a second embodiment.

### DESCRIPTION OF EMBODIMENTS

It might cause reduction in convenience of a communication device, as such the power consumption of the communication device is increased, to transmit, in order to reduce burst noise caused by a burst signal, an interference compensation signal at all times, regardless of a state of communication with a base station.

Also, when, in order to reduce burst noise, the above-described interference compensation signal is used, it is not possible to use a frequency channel used for the interference compensation signal in communication and calls in other communication devices in a communication system, and the capacity of the communication system is reduced. Assume that, in order not to cause reduction in the capacity of the communication system, a single interference compensation channel is shared by a plurality of base stations. In this case, information of a frequency channel allocated as the interference compensation channel at a base station side is desired to be shared by all of base stations and communication devices in the communication system, and accordingly, the configuration of the entire communication system is desired to be changed.

In the GSM specification, a cell method is used for arrangement of base stations and, in order not to cause interference with a plurality of adjacent base stations at the time of handover of a communication device, frequencies are elaborately allocated. If a configuration in which a communication device determines a frequency that is to be allocated to an interference compensation signal is employed, the communication device is desired to known not only merely a base station to which the communication device is to be coupled but also which frequency channels are used by a plurality of adjacent base stations, and complicate control is performed in the communication device.

Embodiments related to communication devices which may reduce interference to communications of other communication devices will be described in detail with reference to the accompanying drawings.

### First Embodiment

### Configuration Example of Communication Device

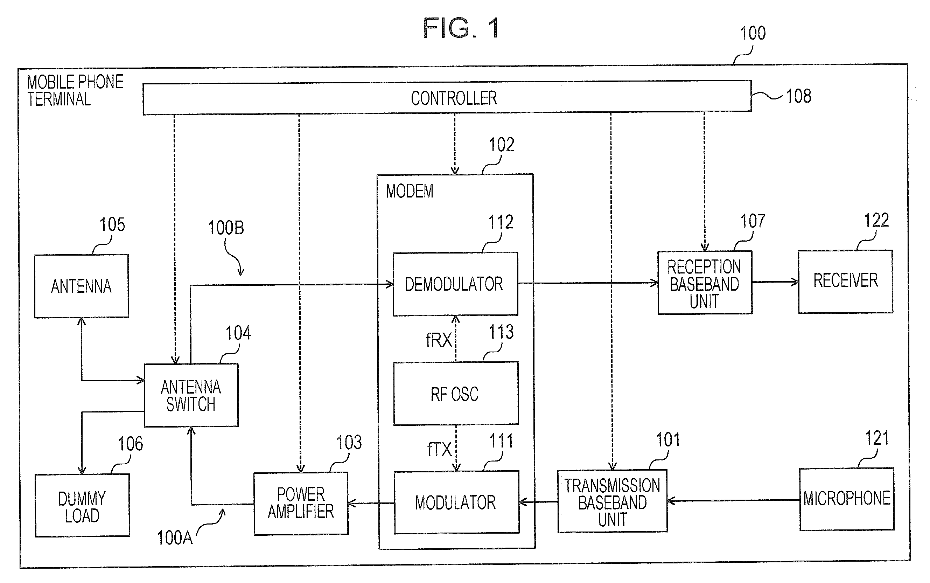

FIG. 1 is a configuration diagram illustrating a communication device according to a first embodiment. An example where a mobile phone terminal 100 that performs radio communication with a base station using a TDMA communication method in accordance with the GSM specification is used as the communication device will be descried. In FIG. 1, the solid line represents a transmission and reception signal and a dotted line represents a control signal.

The mobile phone terminal 100 includes a transmission baseband unit 101, a modem (a transmission and reception unit) 102, a power amplifier 103, an antenna switch 104, an antenna 105, a dummy load 106, a reception baseband unit 107, and a controller 108. The modem 102 includes a modulator 111, a demodulator 112, and a radio frequency oscillator 113.

A configuration example of FIG. 1 includes a microphone 121 and a receiver 122. The microphone 121 converts voice of a user of the mobile phone terminal 100 to a transmission signal and outputs the transmission signal to the transmission baseband unit 101.

The transmission baseband unit 101, the modulator 111 of the modem 102, and the power amplifier 103 form a transmission system 100A that transmits the transmission signal. The demodulator 112 of the modem 102 and the reception baseband unit 107 form a reception system 100B that receives a reception signal.

The transmission baseband unit 101 is controlled by the controller 108, and performs baseband processing, such as digitalization from an analog electric signal that is an input signal to a digital signal, voice coding, channel coding, filtering, and the like. A baseband-processed transmission baseband signal is transmitted to the modulator 111 in the modem 102.

The transmission baseband unit 101 includes, for example, a CPU and a memory, such as a ROM, a RAM, and the like, and performs control related to the generation of the transmission baseband signal by causing the CPU to execute a control program stored in the ROM or the like and using the RAM as an area for operation data.

The modulator 111 of the modem 102 is controlled by the controller 108 and modulates the transmission baseband signal with a transmission frequency fTX at which the radio frequency oscillator 113 oscillates in order to transmit the transmission baseband signal to a base station. This modulated voice signal (a communication signal) is output such that a power change on a time axis is put in a burst state in accordance with the TDMA communication method. Power of the communication signal in a burst state greatly varies between slots. A communication signal, such as a voice signal, a control signal, and the like, which has desired information and is communicated between the mobile phone terminal 100 and a base station will be hereinafter referred to as a communication burst signal.

In accordance with control of the controller 108, the transmission baseband unit 101 generates dummy data that serves as a source of a current compensation burst signal, which will be described later, and transmits the dummy data to the transmission system 100A. The modulator 111 modulates the dummy data and thus outputs the current compensation burst signal.

The dummy data (the current compensation burst signal) is information that is not related to communication with the base station. The modulator 111 modulates the dummy data generated by the transmission baseband unit 101 at the transmission frequency fTX (the same frequency as that of the communication burst signal) at which the radio frequency oscillator 113 oscillates and outputs the modulated dummy data as a current compensation burst signal in a burst state.

The power amplifier 103 amplifies the communication burst signal and the current compensation burst signal which are output by the modulator 111. The power amplifier 103 is capable of setting an amplification factor (a gain), based on control of the controller 108. In this case, the power amplifier 103 reduces the output level of the current compensation burst signal in accordance with the output level of the communication burst signal.

The antenna switch 104 performs switching in accordance with control of the controller 108 at a transmission timing of a slot of the communication burst signal such that the transmission system 100A is coupled to the antenna 105. Also, the antenna switch 104 performs switching at a reception timing of a reception signal such that the antenna 105 is coupled to the reception system 100B.

The antenna switch 104 performs switching in accordance with control of the controller 108 such that connection between the transmission system 100A and the antenna 105 is cut during a period of the slot of the current compensation burst signal. In this case, the antenna switch 104 couples the transmission system 100A to the dummy load 106 during the period of the slot of the current compensation burst signal.

The dummy load 106 may use a terminator, such as a resistor and the like. The dummy load 106 consumes (absorbs) output energy after power of the power compensation burst signal is amplified by the power amplifier 103. Thus, radiation of the current compensation burst signal from the antenna 105 of the mobile phone terminal 100 to the outside is not caused.

The antenna 105 radiates the communication burst signal input via the antenna switch 104 and wirelessly transmits the communication burst signal to the base station. The antenna 105 receives the reception signal transmitted from the base station and outputs the reception signal to the antenna switch 104.

The demodulator 112 of the modem 102 demodulates the reception signal switched by the antenna switch 104 to the baseband frequency and outputs the demodulated reception signal to the reception baseband unit 107.

The reception baseband unit 107 performs baseband demodulation processing of the reception signal in accordance with control of the controller 108 and outputs a voice signal of the reception signal to the receiver 122. The receiver 122 converts the voice signal to reception voice and outputs the reception voice to the user.

The controller 108 controls each of the above-described components of the mobile phone terminal 100. The controller 108 includes, for example, a CPU and a memory, such as a ROM, a RAM, and the like, and controls radio transmission and reception by causing the CPU to execute a control program stored in the ROM or the like, and using the RAM as an area for operation data.

The controller 108, for example, processes the transmission signal and the reception signal by time and controls, for the transmission signal, each of the generation of the communication burst signal and the generation of the current compensation burst signal. Although details will be described later, the controller 108, for example, performs control in which the current compensation burst signal is output (allocated) to a slot adjacent to the slot of the communication burst signal. The adjacent slot may be a previous or subsequent slot or previous and subsequent slots, assuming the slot of the communication burst signal as a reference.

The controller 108 causes the antenna switch 104 to couple the transmission system 100A to the antenna 105 at the time of transmission of the transmission signal, and causes the antenna switch 104 to couple the antenna 105 to the reception system 100B at the time of reception of the reception signal.

In the first embodiment, the controller 108 causes the antenna switch 104 to couple the transmission system 100A to the antenna 105 only during the period of the slot of the communication burst signal of the communication burst signal and the current compensation burst signal, which have been generated. The antenna 105 is disconnected from the transmission system 100A during the period of the slot of the current compensation burst signal. The current compensation burst signal is not radiated from the antenna 105 of the mobile phone terminal 100 to the outside. The current compensation burst signal is output to the dummy load 106, and the dummy load 106 consumes energy of the current compensation burst signal after power thereof was amplified by the power amplifier 103.

In a second embodiment, which will be described later, when the slot of the current compensation burst signal is not used in other mobile phone terminals, the controller 108 performs control in which each of the communication burst signal, which is of the transmission signal, and the current compensation burst signal is radiated from the antenna 105 to the outside. In this case, the controller 108 causes the antenna switch 104 to couple the transmission system 100A to the antenna 105 during the periods of the slots of the current burst signal and the current compensation burst signal.

The controller 108 sets the radio frequency oscillator 113 to a predetermined transmission frequency fT7C during the period of the slot of the transmission signal at the time of transmission, and sets the radio frequency oscillator 113 to a predetermined transmission frequency fRX during the period of the slot of the reception signal at the time of reception.

The controller 108 controls the power amplifier 103, based on a state of communication and a distance between the mobile phone terminal 100 and the base station, and performs control in which output levels of the communication burst signal, which is the transmission signal, and the current compensation burst signal are varied. In this case, control in which the output level of the current compensation burst signal is varied in accordance with the output level of the communication burst signal is performed.

Each of the above-described components of the mobile phone terminal 100 is operated by power supply from a battery (not illustrated). Therefore, the controller 108 may control the presence or absence of transmission of the current compensation signal in accordance with a remaining battery level. Control in which the current compensation burst signal is transmitted only at the time of call connection (CS: circuit switched) illustrated in FIG. 1 and the current compensation burst signal is not transmitted at the time of packet connection (PS: packet switched) may be performed.

The above-described interference of burst noise to a hearing aid occurs at the time of call connection, and therefore, it is advantageous to perform control in which the current compensation burst signal is transmitted at the time of call connection.

### Interference of Burst Noise to Hearing Aid

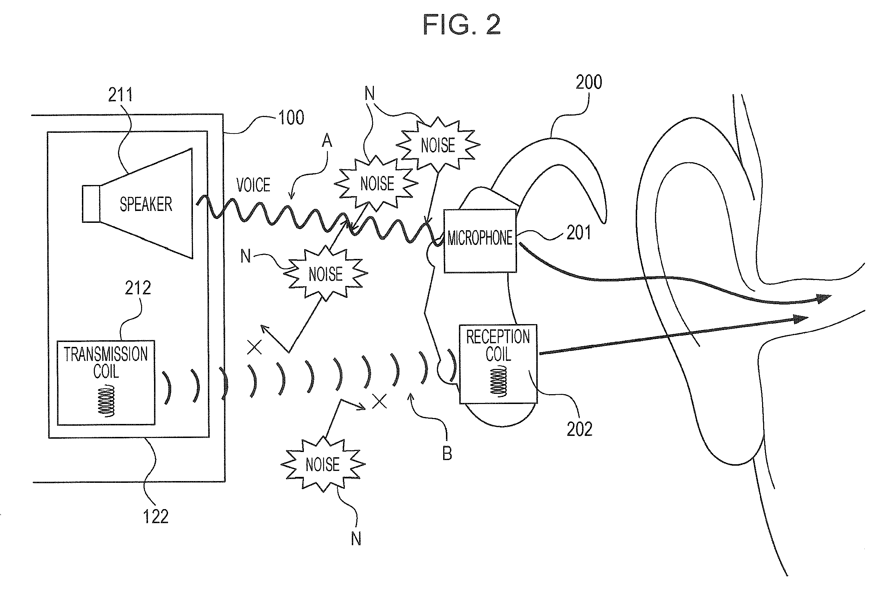

FIG. 2 is a diagram illustrating a communication mode between the communication device according to the first embodiment and a hearing aid. A user having difficulty in hearing or the like uses a hearing aid (a voice converter) 200 to amplify reception voice and hears the amplified reception voice. There are types of the hearing aid 200, which are configured to have, in addition to a normal voice amplification mode in which a voice is amplified, a mode (which is referred to as a T mode) in which a magnetic signal B (an inductive magnetic field) is detected by a reception coil (a pickup coil) 202 and voice conversion is preformed thereon, after collecting a voice signal A using a microphone 201.

The receiver 122 of the mobile phone terminal 100 may be configured to include a speaker 211 that outputs the normal voice signal A and a transmission coil 212 that outputs the magnetic signal B corresponding to the T mode.

By performing transmission in the T mode, mixture of ambient noise N in a voice component in communication between communication devices (the mobile phone terminal 100 and the hearing aid 200) may be reduced, and the reception voice may be made easy to hear. However, in the T mode, as described above, when the hearing aid 200 is interfered by burst noise of a magnetic component emitted from the inside of the mobile phone terminal 100, the hearing aid 200 generates audible noise.

### Transmission Processing

Next, an example of transmission processing of a communication signal, which is performed by the transmission system 100A, will be described. In the example of FIG. 1, the microphone 121 converts call voice made by the user of the mobile phone terminal 100 to an electric signal, outputs the electric signal to the transmission baseband unit 101, and generates a transmission baseband signal. In this case, the controller 108 controls a slot and a frame timing in and at which the transmission baseband signal is transmitted to the modulator 111. The slot and frame timing are determined, based on signaling information communicated between the mobile phone terminal 100 and a base station before a call starts.

Then, in accordance with control of the controller 108, the modulator 111 modulates the transmission baseband signal at the radio frequency fTX used for transmitting the transmission baseband signal to the base station, and outputs the modulated transmission baseband signal as a communication burst signal. In this case, the controller 108 determines the radio frequency fTX for transmission and sets the determined radio frequency fTX for the radio frequency oscillator 113. The radio frequency fTX is also set, based on the transmission frequency channel of the signaling information, which has been described.

The communication burst signal is output-amplified by the power amplifier 103, and then, is transmitted to the antenna switch 104. In this case, the controller 108 controls a signal gain of the power amplifier 103, based on the signaling information from the base station, such that the communication burst signal is a predetermined signal output.

Thereafter, in accordance with control of the controller 108, the communication burst signal is radiated from the antenna 105 to the outside via the antenna switch 104.

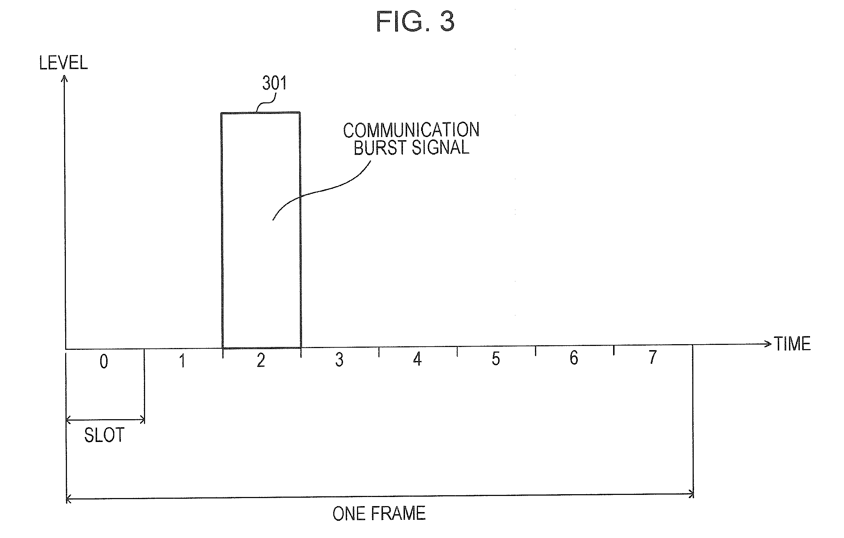

FIG. 3 is a diagram illustrating a communication burst signal transmitted by the communication device according to the first embodiment. One frame is formed by eight slots 0 to 7, and one user (of one mobile phone terminal 100) uses one (the slot 2 in the example in FIG. 3) of the slots 0 to 7, which is allocated by the base station to transmit and output the communication burst signal 301. During a call, the slot (the slot 2) of each frame used by the mobile phone terminal 100 of the one user is fixed.

### Reception Processing

Next, an example of reception processing of the communication signal, which is performed by the reception system 100B, will be described. Voice of the other person of the call, which is the reception signal, is modulated at the reception frequency fRX, which is different from the radio frequency fTX at the time of transmission, and is transmitted from the base station. The mobile phone terminal 100 transmits the reception signal received by the antenna 105 to the demodulator 112 of the modem 102 via the antenna switch 104.

Then, the demodulator 112 demodulates the reception signal to a baseband frequency and transmits the demodulated reception signal to the reception baseband unit 107. The reception baseband unit 107 transmits a voice signal, among baseband-demodulation-processed signals, to the receiver 122, and the user may hear the voice signal as reception voice from the receiver 122.

As described above, for the voice signal, because of the receiver 122, there are the voice amplification mode in which the voice signal A is output from the speaker 211 and the T mode in which the magnetic signal B is output from the TCP packet processing section 212. When the hearing aid 200 is caused to be in the T mode, the pickup coil 202 in the hearing aid 200 receives the magnetic signal B (an inductive magnetic field) transmitted by the receiver 122 and amplifies the received magnetic signal B, so that mixture of the ambient noise N is not caused and the voice of the other person of the call may be easily heard.

### Current Compensation Burst Signal

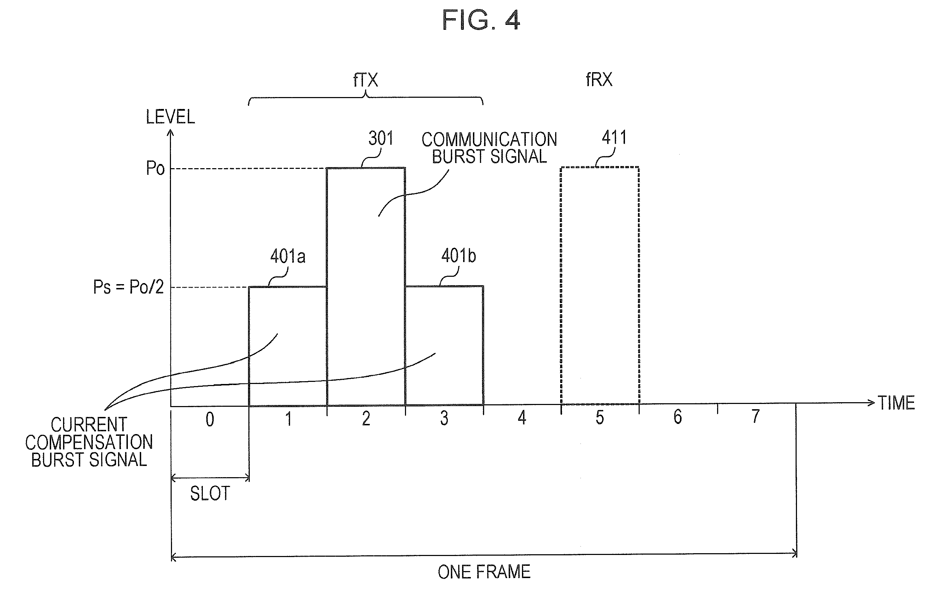

FIG. 4 is a diagram illustrating an example of a current compensation burst signal transmitted by the communication device according to the first embodiment. The above-described communication burst signal 301 has, for example, large power, that is, 2 W at maximum. Each of the modulator 111, the power amplifier 103, and the like of the transmission system 100A includes a coil (an inductor) in order to generate a transmission signal (the communication burst signal 301).

The communication burst signal 301 causes a drastic current change (an incoming current) on coils provided on the transmission system 100A (for example, the power amplifier 103), a power IC, and the like, and emits the above-described burst noise. In this case, the inductive magnetic field generated based on the coil on the transmission system 100A causes the generation of an inductive magnetic field in other coils, such as, for example, a transmission coil 212 provided on the receiver 122, and the like, in the mobile phone terminal 100, and the transmission coil 212 emits burst noise.

In order to reduce the burst noise, the controller 108 reduces a large current change caused along with the generation of the communication burst signal 301. Then, the controller 108 controls the transmission baseband unit 101 and the modem 102 (the modulator 111) to output (allocate) a current compensation burst signal 401 to a slot adjacent to the slot of the communication burst signal 301.

In this case, the controller 108 causes a previous slot (a slot 1) or a subsequent slot (a slot 3) before or after the slot used by the communication burst signal 301, which has been allocated by the base station, to output the current compensation burst signal 401 (401a, 401b). In this case, the controller 108 performs control in which the current compensation burst signal 401 is output at a lower output level than an output level of the communication burst signal 301. Thus, the drastic current change (the incoming current) of the communication burst signal 301 to the coil of the power amplifier 103 provided in the transmission system 100A may be reduced.

The power amplifier 103 is caused by the current compensation burst signal 401 to consume a certain current, a drastic current difference between the slot of the communication burst signal 301 that communicates with the base station and a slot in which communication with the base station is not performed is reduced, and thus, a current change of the communication burst signal 301 is made moderate. Accordingly, emission of burst noise generated from the coil of the power amplifier 103 provided on the transmission system 100A, which serves as a generation source, to the outside may be reduced.

Also, the controller 108 may cause one of the previous and subsequent slots (the slots 1 and 3) adjacent to the slot (the slot 2) of the communication burst signal 301 to output the current compensation burst signal 401 (401a, 401b).

In accordance with control of the controller 108, dummy data, which is to be a source of the current compensation burst signal 401, is generated, for example, by the transmission baseband unit 101 using a frequency correction burst or a dummy burst. Each of the frequency correction burst and the dummy burst is held as a data code of a combination of "0" and "1", defined by the GSM specification (3 GPP TS45.002) in a memory of the transmission baseband unit 101, or the like, in advance. As the current compensation burst signal 401, a normal burst of a different type or a synchronization burst may be used, but the frequency correction burst and the dummy burst are fixed data at all times and are convenient in use, and therefore, the frequency correction burst and the dummy burst may be used in a simple manner only by performing readout of the data codes.

The communication burst signal 301 and the current compensation burst signal 401 have the same transmission frequency fTX. Note that, as illustrated in FIG. 4, the mobile phone terminal 100 receives a reception signal 411 transmitted from the base station in a slot (a slot 5) three slots away from the slot (the slot 2) of the communication burst signal 301 in the same frame at the predetermined reception frequency fRX.

The slot (the slot 1, 3) used by the current compensation burst signal 401 is not an originally allocated slot, and therefore, if the slot is used by some other user (some other mobile phone terminal) when the current compensation burst signal 401 is radiated from the mobile phone terminal 100, some kind of influence occurs. Therefore, in the first embodiment, the controller 108 controls the antenna switch 104 at a generation timing of the current compensation burst signal 401 and transmits the current compensation burst signal 401 (401a, 401b) to the dummy load 106.

In the example of FIG. 4, the current compensation burst signal 401 (401a, 401b) of the slot (the slot 1, 3) is transmitted to the dummy load 106. Note that, in a configuration in which the dummy load 106 is not provided, the power amplifier 103 and the modem 102 might be damaged by internal reflection of the current compensation burst signal 401.

Then, the controller 108 controls the power amplifier 103 to set an output level Ps of the current compensation burst signal 401 in accordance with an output level Po of the communication burst signal 301. For example, the output level Ps of the current compensation burst signal 401 is set such that a current change of the slot at a rise or a fall of the communication burst signal 301 and a current change of the slot at a rise or a fall of the current compensation burst signal 401 are close to each other.

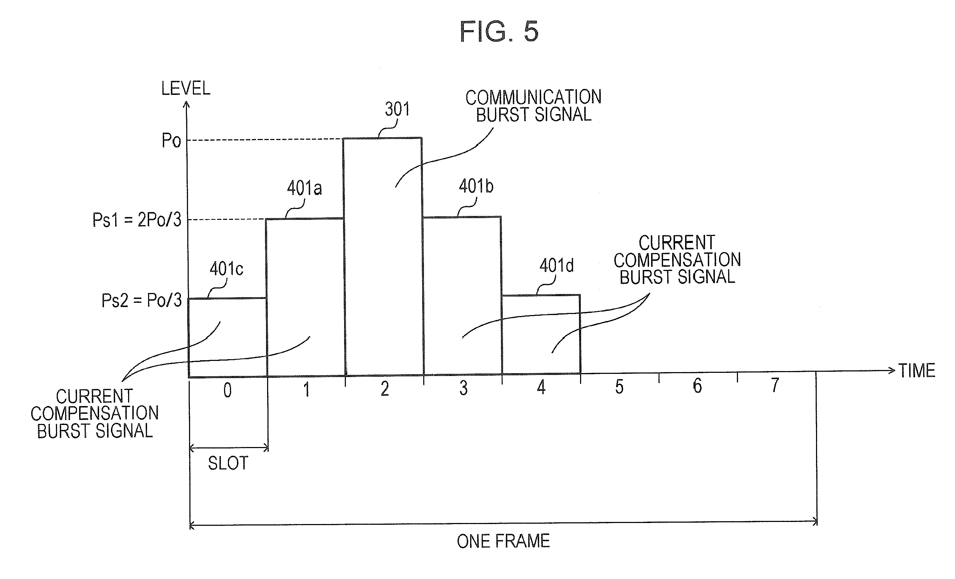

FIG. 5 is a diagram illustrating another example of a current compensation burst signal transmitted by the communication device according to the first embodiment. If it is assumed that a desired amount of reduction in current change is not satisfied only by the current compensation burst signal 401 of the slot adjacent to the slot in which the communication burst signal 301 is transmitted, the number of slots of the current compensation burst signal 401 may be further increased.

In the example of FIG. 5, current burst signals 401a and 401b, which have an output level Ps1, are allocated in the previous and subsequent slots 1 and 3, which are adjacent to the slot 2 in which the communication burst signal 301 is transmitted. Furthermore, current compensation burst signals 401c and 401d, which have an output level Ps2, are allocated in two previous and subsequent slots 0 and 4, each of which is adjacent to the corresponding one of the slots 1 and 3.

In the example of FIG. 5, the output levels Ps1 and Ps2 of the current compensation burst signal 401 in the previous and subsequent slots are gradually reduced (Ps1 > Ps2) relative to the output level Po of the communication burst signal 301. Thus, the current changes at a rise and a fall of the communication burst signal 301 may be further reduced.

Note that, if, as illustrated in FIG. 4, the slot (the slot 5) three slots away from the slot (the slot 2) of the communication burst signal 301, which is the transmission signal, is defined as a slot for the reception signal 411, the number of slots of the current compensation burst signal 401 is four at maximum, as illustrated in FIG. 5.

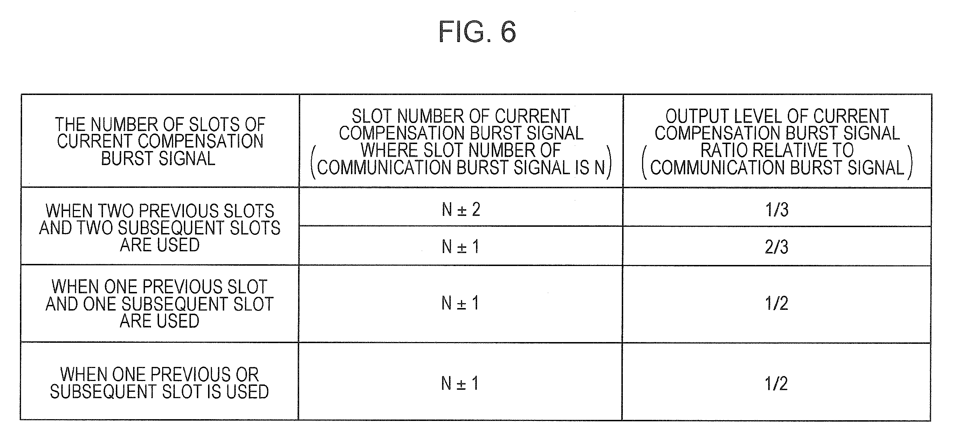

FIG. 6 is a table illustrating an example of combinations of the number of slots and an output level of a current compensation burst signal transmitted by the communication device according to the first embodiment. An example of allocation of the current compensation burst signal 401 performed by the controller 108 will be described below.

When the number of slots used by the current compensation burst signal 401 is two, the output level of each of the current compensation burst signals 401a and 401b in slots N±1 adjacent to a slot with a slot number N of the communication burst signal 301 is 2/3 of the output level Po of the communication burst signal 301. Also, the output level of each of the current compensation burst signals 401c and 401d in slots N±2 is 1/3 of the output level Po of the communication burst signal 301 (see FIG. 5).

When the number of slots used by the current compensation burst signal 401 is one, the output level of each of the current compensation burst signals 401a and 401b in the slots N±1 adjacent to the slot with the slot number N of the communication burst signal 301 is 1/2 of the output level Po of the communication burst signal 301 (see FIG. 4).

When only one previous or subsequent slot before or after the slot of the communication burst signal 301 is used as the current compensation burst signal 401, the output level of the current compensation burst signal 401a (or 401b) in the slot N±1 is 1/2 of the output level Po of the communication burst signal 301.

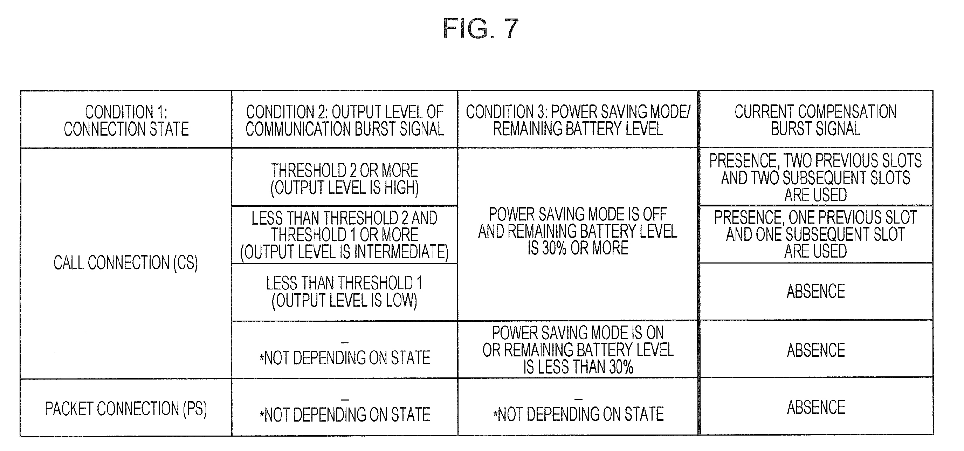

FIG. 7 is a table illustrating an example of output control of a current compensation burst signal for each use condition, which is performed by the communication device according to the first embodiment. The controller 108 determines the presence or absence of the current compensation burst signal 401 that has been generated and the number of slots that are to be used, for example, based on a combination of conditions 1 to 3 illustrated in FIG. 7.

The controller 108 determines the number of slots and the output level of the current compensation burst signal 401, based on the output level Po of the communication burst signal 301. Also, the output level of the current compensation burst signal 401 may be determined, based on the output level Po of the communication burst signal 301 and the number of slots that may be used for the current compensation burst signal 401.

For example, when a distance between the mobile phone terminal 100 and the base station is small and communication quality of a call is good, the output level Po of the communication burst signal 301 may be low. In this case, each of current changes at a rise and a fall of the communication burst signal 301 is similarly small. Therefore, an amount of interference of bust noise to the hearing aid 200 at a call is as small as that the user may ignore, even without generating the current compensation burst signal 401.

If the output level of a communication burst signal is a predetermined threshold or less, the controller 108 may turn off the generation of the current compensation burst signal 401. Thus, when the quality of communication with the base station is good, the current compensation burst signal 401 is not transmitted and a slot is not uselessly used, so that useless current consumption for generating the current compensation burst signal 401 is reduced, and battery consumption is also reduced.

A case where the generation of the current compensation burst signal 401 is off corresponds to a case where a function of bust noise reduction (a reduction mode) is off, and a case where the generation of the current compensation burst signal 401 is on corresponds to a case where the function of the burst noise reduction (the reduction mode) is on. The controller 108 may automatically control on and off of the function of the burst noise reduction (the reduction mode). Thus, the function of the burst noise reduction (the reduction mode) may be controlled to be on, as appropriate, and also, useless current consumption may be reduced.

The threshold is calculated in advance from the relationship of the output level of the communication burst signal, which has been measured in advance, and the amount of interference to the hearing aid, and is stored and held in a memory such that the controller 108 (CPU) may read out the threshold.

The example of output control of the current compensation burst signal 401, which is illustrated in FIG. 7, will be described below. The controller 108 controls the generation of the current compensation burst signal 401 in the following manner, based on a combination of the conditions 1 to 3.

As for the condition 1, the controller 108 determines whether use of the mobile phone terminal 100 is call connection (CS) or a packet connection (PS).

As for the condition 2, the controller 108 determines which one of three levels (low, intermediate, and high) the output level Po of the communication burst signal 301 is, for example, using thresholds (thresholds 1 and threshold 2) of two levels. The threshold 1 is set in advance so as to correspond to a value with which the output level of the communication burst signal 301 is low, and the threshold 2 is set in advance so as to correspond to a value with which the output level of the communication burst signal 301 is high (the output level: the threshold 1 < the threshold 2).

As for the condition 3, the controller 108 performs determination, using a power state of the mobile phone terminal 100 and, in this case, performs determination, based on whether the power saving mode is on or off and the remaining battery level (in the illustrated example, a threshold is a remaining battery level of 30%).

Assume that, for the condition 1, use of the mobile phone terminal 100 is call connection, for the condition 2, the output level Po of the communication burst signal 301 is the threshold 2 or more (the output level is high) and, for the condition 3, the power saving mode is off and the battery remains (the remaining battery level is 30% or more). In this case, the controller 108 uses, for the current compensation burst signal 401, two previous slots and two subsequent slots before and after the slot the communication burst signal 301. In this state, as illustrated in FIG. 5, the current compensation burst signals 401a to 401d are output using four slots in total.

Assume that, for the condition 1, use of the mobile phone terminal 100 is call connection, for the condition 2, the output level Po of the communication burst signal 301 is less than the threshold 2 and the threshold 1 or more (the output level is intermediate) and, for the condition 3, the power saving mode is off and the battery remains (the battery remaining amount is 30% or more). In this case, the controller 108 uses, for the current compensation burst signal 401, one previous slot and one subsequent slot before and after the communication burst signal 301. In this state, as illustrated in FIG. 4, the current compensation burst signals 401a and 401b are output in two slots in total.

Assume that, for the condition 1, use of the mobile phone terminal 100 is call connection, for the condition 2, the output level Po of the communication burst signal 301 is less than the threshold 1 (the output level is low) and, for the condition 3, the power saving mode is off and the battery remains (the battery remaining amount is 30% or more). In this case, the controller 108 does not output the current compensation burst signal 401 (does not cause the transmission baseband unit 101 to generate dummy burst).

Assume that, for the condition 1, use of the mobile phone terminal 100 is call connection and, for the condition 3, the power saving mode is on and the battery does not remain (the battery remaining amount is less than 30%). In this case, the controller 108 does not output the current compensation burst signal 401 (does not cause the transmission baseband unit 101 to generate dummy burst), regardless of the condition 2 (the output level Po of the communication burst signal 301).

Also, if, for the condition 1, use of the mobile phone terminal 100 is packet connection, regardless of the condition 2 and the condition 3, the user does not make a call and an influence of burst noise on the user of the hearing aid 200 does not occur, and therefore, the controller 108 does not output the current compensation burst signal 401 (does not cause the transmission baseband unit 101 to generate dummy burst).

As described above, the controller 108 properly controls the state of output of the current compensation burst signal 401 by combining the connection state (the condition 1), the output level Po of a current compensation burst signal (the condition 2), and the power state (the condition 3), which are use conditions of the mobile phone terminal 100.

For example, when a distance between the mobile phone terminal 100 and the base station is large and communication quality of a call is poor, the current compensation burst signal 401 is caused to have an output level corresponding to the output level Po of the communication burst signal 301, and the number of slots in which the current compensation burst signal 401 is transmitted is increased. As described above, the output level and the number of slots of the current compensation burst signal 401 are controlled in accordance with communication quality, and thus, bust noise is reduced.

On the other hand, when a distance between the mobile phone terminal 100 and the base station is small and communication quality of a call is good, the output level Po of the communication burst signal 301 is low and burst noise is small, and therefore, the number of slots of the current compensation burst signal 401 is reduced, and the generation of the current compensation burst signal 401 is not performed. Also, in the above-described example, when the remaining battery level is low, and also, when the power saving mode is set, a higher priority may be placed on reduction in consumption current than on improvement of call quality without outputting the current compensation burst signal 401.

### Example of Control Processing of Current Compensation Burst Signal

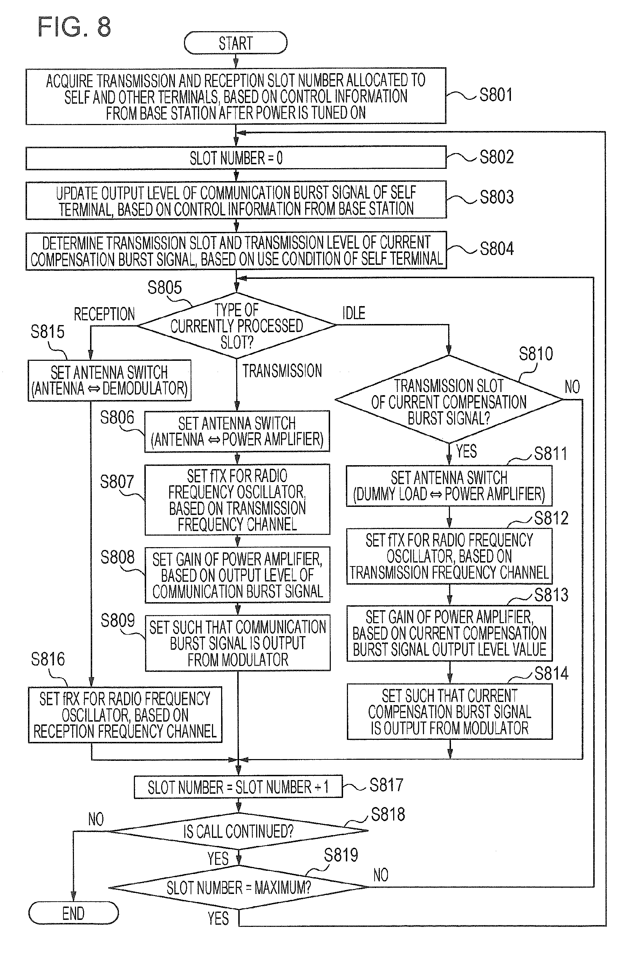

FIG. 8 is a flow chart illustrating an example of control processing of controlling output of a current compensation burst signal, which is performed by the communication device according to the first embodiment. A processing example in which, when call connection of the user is established, the controller 108 controls each component of the mobile phone terminal 100 will be described.

First, the controller 108 acquires respective slot numbers of transmission and reception slots allocated to the mobile phone terminal 100 and the other mobile phone terminals, based on control information communicated from the base station by turning on the power of the mobile phone terminal 100 (Operation S801). The acquired slot numbers are held in a memory of the controller 108. In the example of FIG. 3, a transmission slot allocated to the mobile phone terminal 100 is the slot 2. In this case, a reception slot allocated to the mobile phone terminal 100 is the slot 5, as illustrated in FIG. 4.

Next, the controller 108 sets the slot number of a currently processed slot in the mobile phone terminal 100 to an initial value 0 (Operation S802). Then, the controller 108 updates the value of the output level Po of the communication burst signal 301 of the mobile phone terminal 100, based on the control information from the base station (Operation S803).

Next, the controller 108 determines a transmission slot and a transmission level of the current compensation burst signal 401, based on the use conditions of the mobile phone terminal 100 (Operation S804). In this case, as illustrated in FIG. 7, the controller 108 determines a transmission slot (the presence or absence of transmission, the number of slots, and the output level Ps) of the current compensation burst signal 401, which is suitable for the use conditions (the conditions 1 to 3) of the mobile phone terminal 100.

Next, the controller 108 determines the type of the currently processed slot (Operation S805). The type of each slot is one of transmission of the communication burst signal 301, idle (in this type, there is no transmission and reception of an effective communication signal, except for the current compensation burst signal 401), and reception of a transmission signal.

In Operation S805, if the type of the currently processed slot is transmission (TRANSMISSION in Operation S805), the controller 108 performs switch control on the antenna switch 104 such that the power amplifier 103 of the transmission system 100A is coupled to the antenna 105 (Operation S806).

Thereafter, the controller 108 sets the transmission frequency fTX for the radio frequency oscillator 113, based on the transmission frequency channel (Operation S807). Then, the controller 108 sets a gain of the power amplifier 103, based on the output level Po of the communication burst signal 301 (Operation S808). Thereafter, the controller 108 sets such that the communication burst signal 301 is output from the modulator 111 (Operation S809), and the process proceeds to Operation S817.

In Operation S805, if the type of the currently processed slot is idle (IDLE in Operation S805), the controller 108 determines whether or not the currently processed slot is the transmission slot of the current compensation burst signal 401 (Operation S810). If the currently processed slot is the transmission slot of the current compensation burst signal 401 (YES in Operation S810), the process proceeds to Operation S811 and, if the currently processed slot is not the transmission slot of the current compensation burst signal 401 (NO in Operation S810), the process proceeds to Operation S817.

In Operation S811, the controller 108 performs switch control on the antenna switch 104 such that the power amplifier 103 of the transmission system 100A is coupled to the dummy load 106 (Operation S811).

Thereafter, the controller 108 sets the transmission frequency fTX for the radio frequency oscillator 113, based on the transmission frequency channel (Operation S812). Then the controller 108 sets the gain of the power amplifier 103, based on the output level Ps of the current compensation burst signal 401 (Operation S813). Thereafter, the controller 108 sets such that the current compensation burst signal 401 is output from the modulator 111 (Operation S814), and the process proceeds to Operation S817.

In Operation S805, if the type of the currently processed slot is reception (RECEPTION in Operation S805), the controller 108 performs switch control on the antenna switch 104 such that the demodulator 112 of the reception system 100B is coupled to the antenna 105 (Operation S815).

Thereafter, the controller 108 sets the reception frequency fRX for the radio frequency oscillator 113, based on the reception frequency channel (Operation S816), and the process proceeds to Operation S817.

In Operation S817, the controller 108 adds one to the slot number of the currently processed slot (Operation S817), and determines whether or not the call connection is continued (Operation S818). If the call connection is continued (YES in Operation S818), the controller 108 determines whether or not the slot number of the currently processed slot is the maximum (Operation S819). In the example of FIG. 3, the maximum of the slot number is seven. If the slot number of the currently processed slot is not the maximum (NO in Operation S819), the process returns to Operation S805 and, if the slot number of the currently processed slot is the maximum (YES in Operation S819), the process returns to Operation S802 to process a next slot.

In Operation S818, if the call connection is not continued (NO in Operation S818), the call has been ended, and the above-described processing is ended.

According to the first embodiment which has been described above, a mobile phone terminal uses a slot adjacent to a slot which has been allocated by a base station and in which a communication burst signal is transmitted to output a current compensation burst signal having a lower output level than that of the communication burst signal, in order to perform communication. A power amplifier is caused to consume a certain current by the current compensation burst signal, and thus, a current difference between the slot of the communication burst signal that is transmitted to a base station and a slot which does not communicate with the base station may be reduced. Accordingly, a drastic current change in a coil provided in the power amplifier may be reduced, and emission of burst noise of a magnetic field component to the outside of the mobile phone terminal is not caused.

Thus, mixture of burst noise (audible noise) in an external device located close to the mobile phone terminal, that is, for example, a hearing aid which is coupled to the mobile phone terminal and is in the T mode in which a signal of call voice of the magnetic field component is amplified, is not caused, voice may be clearly heard through the hearing aid, and deterioration of the hearing aid may be reduced.

The slot in which the current compensation burst signal was generated is output to a dummy load by antenna switching, and output energy after the power of the current compensation burst signal was amplified is consumed in the dummy load. Thus, the current compensation burst signal is not radiated from the antenna of the mobile phone terminal, and therefore, interference of the current compensation burst signal to communications of the other mobile phone terminal allocated in the same frame may be reduced.

The current compensation burst signal is not transmitted to the outside of the mobile phone terminal, and therefore, may be caused to be in the same frequency channel as that allocated by the base station. Thus, control of the base station that allocates another frequency, such as a compensation frequency used for reducing interference with other mobile phone terminals may be omitted. Then, an influence, such as an increase in the capacity of the communication system, and the like, is not caused, control at the base station side may be omitted, and burst noise emitted by the mobile phone terminal may be reduced.

### Second Embodiment

Next, a second embodiment will be described. In the second embodiment, a slot other than a slot used in communication between a base station and a mobile phone terminal is a vacant slot which is not used by other users (other mobile phone terminals), the current compensation burst signal 401 is supplied to the antenna 105, not the dummy load 106. The second embodiment is different from the first embodiment in that, using the same components as those of the first embodiment (see FIG. 1), output control of the current compensation burst signal 401 is changed.

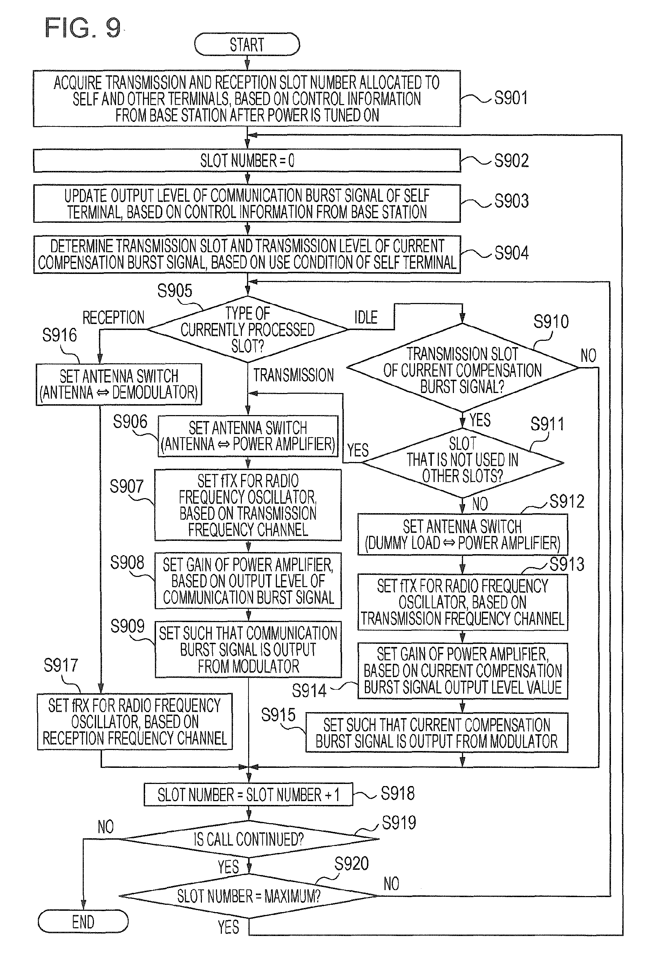

FIG. 9 is a flow chart illustrating an example of control processing of controlling output of a current compensation burst signal, which is performed by a communication device according to the second embodiment. A processing example in which, when call connection of a user is established, the controller 108 controls each component of the mobile phone terminal 100 will be described.

First, the controller 108 acquires respective slot numbers of transmission and reception slots allocated to the mobile phone terminal 100 and the other mobile phone terminals, based on control information communicated from the base station by turning on the power of the mobile phone terminal 100 (Operation S901). The acquired slot numbers are held in a memory of the controller 108.

Next, the controller 108 sets the slot number of a currently processed slot in the mobile phone terminal 100 to an initial value 0 (Operation S902). Then, the controller 108 updates the value of the output level Po of the communication burst signal 301 of the mobile phone terminal 100, based on the control information from the base station (Operation S903).

Next, the controller 108 determines a transmission slot and a transmission level of the current compensation burst signal 401, based on the use conditions of the mobile phone terminal 100 (Operation S904). In this case, as illustrated in FIG. 7, the controller 108 determines a transmission slot (the presence or absence of transmission, the number of slots, and the output level Ps) of the current compensation burst signal 401, which is suitable for the use conditions (the conditions 1 to 3) of the mobile phone terminal 100.

Next, the controller 108 determines the type of the currently processed slot (Operation S905). The type of each slot is one of transmission of the communication burst signal 301, idle (in this type, there is no transmission and reception of an effective communication signal, except for the current compensation burst signal 401), and reception of a transmission signal.

In Operation S905, if the type of the currently processed slot is transmission (TRANSMISSION in Operation S905), the controller 108 performs switch control on the antenna switch 104 such that the power amplifier 103 of the transmission system 100A is coupled to the antenna 105 (Operation S906).

Thereafter, the controller 108 sets the transmission frequency fTX for the radio frequency oscillator 113, based on the transmission frequency channel (Operation S907). Then, the controller 108 sets a gain of the power amplifier 103, based on the output level Po of the communication burst signal 301 (Operation S908). Thereafter, the controller 108 sets such that the communication burst signal 301 is output from the modulator 111 (Operation S909), and the process proceeds to Operation S918.

In Operation S905, the type of the currently processed slot is idle (IDLE in Operation S905), the controller 108 determines whether or not the currently processed slot is the transmission slot of the current compensation burst signal 401 (Operation S910). If the currently processed slot is the transmission slot of the current compensation burst signal 401 (YES in Operation S910), the process proceeds to Operation S911 and, if the currently processed slot is not the transmission slot of the current compensation burst signal 401 (NO in Operation S910), the process proceeds to Operation S918.

In Operation S911, the controller 108 determines whether or not the currently processed slot is an unused slot in the other mobile phone terminals (Operation S911). Since the controller 108 has acquired the slot numbers of slots allocated to the mobile phone terminal 100 and the other mobile phone terminals in Operation S901, the controller 108 may perform the determination of Operation S911. Then, if the currently processed slot is an unused slot in the other mobile phone terminals (YES in Operation S911), the process proceeds to Operation S906 and the controller 108 executes Operation S906 and subsequent operations. Thus, the current compensation burst signal 401 is radiated from the antenna 105.

On the other hand, if the currently processed slot is not an unused slot in any one of the other mobile phone terminals (NO in Operation S911), the controller 108 executes Operation S912 and subsequent operations. In Operation S912, the controller 108 performs switch control on the antenna switch 104 such that the power amplifier 103 of the transmission system 100A is coupled to the dummy load 106 (Operation S912).

Thereafter, the controller 108 sets the transmission frequency fTX for the radio frequency oscillator 113, based on the transmission frequency channel (Operation S913). Then the controller 108 sets a gain of the power amplifier 103, based on the output level Ps of the current compensation burst signal 401 (Operation S914). Thereafter, the controller 108 sets such that the current compensation burst signal 401 is output from the modulator 111 (Operation S915), the process proceeds to Operation S918.

In Operation S905, if the type of the currently processed slot is reception (RECEPTION in Operation S905), the controller 108 performs switch control on the antenna switch 104 such that the demodulator 112 of the reception system 100B is coupled to the antenna 105 (Operation S916).

Thereafter, the controller 108 sets the reception frequency fRX for the radio frequency oscillator 113, based on the reception frequency channel (Operation S917), and the process proceeds to Operation S918.

In Operation S918, the controller 108 adds one to the slot number of the currently processed slot (Operation S918), and determines whether or not the call connection is continued (Operation S919). If the call connection is continued (YES in Operation S919), the controller 108 determines whether or not the slot number of the currently processed slot is the maximum (Operation S920). In the example of FIG. 3, the maximum of the slot number is seven. If the slot number of the currently processed slot is not the maximum (NO in Operation S920), the process returns to Operation S905 and, if the slot number of the currently processed slot is the maximum (YES in Operation S920), the process returns to Operation S902 to perform a next slot.

In Operation S919, if the call connection is not continued (NO in Operation S919), the call has been ended, and the above-described processing is ended.

According to the second embodiment, which has been described above, similar to the first embodiment, a mobile phone terminal outputs a current compensation burst signal having a lower output level than that of a communication burst signal to previous and subsequent slots adjacent to a slot in which the communication burst signal is transmitted, which has been allocated by a base station, to perform communication. A power amplifier is caused to consume a certain current by the current compensation burst signal, and thus, a drastic current difference between the slot of the communication burst signal used for transmission to the base station and a slot which does not communicate with the base station may be reduced. Accordingly, a drastic current change in a coil provided in the power amplifier may be reduced, and emission of burst noise of a magnetic field component to the outside of the mobile phone terminal is not caused.

Thus, mixture of burst noise (audible noise) in an external device located close to the mobile phone terminal, that is, for example, a hearing aid which is coupled to the mobile phone terminal and is in the T mode in which a signal of call voice of a magnetic field component is amplified, is not caused, voice may be clearly heard through the hearing aid, and deterioration of the hearing aid may be reduced.

According to the second embodiment, depending on whether or not the slot in which the current compensation burst signal was generated is unused in the other mobile phone terminals, switch control is performed on an antenna such that radiation from the antenna or energy consumption in a dummy load is selected.

For example, if the slot in which the current compensation burst signal was generated is used in any one of the other mobile phone terminals, switch control is performed such that output energy after the power of the current compensation burst signal was amplified is consumed in the dummy load. Thus, the current compensation burst signal is not radiated from the antenna of the mobile phone terminal, transmission of the current compensation burst signal in the slot used by the other mobile phone terminals is not caused, and interference of the current compensation burst signal to communications with the other mobile phone terminals may be reduced.

Also, if the slot in which the current compensation burst signal was generated is unused in the other mobile phone terminals, the current compensation burst signal is radiated to the outside from the antenna of the mobile phone terminal. In this case, the slot in which the current compensation burst signal is transmitted is not used by the other mobile phone terminals for communications thereof, and therefore, even when the current compensation burst signal is transmitted to the outside, interference to communications of the other mobile phone terminals is not caused.

By the above-described control according to the second embodiment, the number of times the antenna switch performs switching on the current compensation burst signal may be reduced. The more the number of slots that are not used by the other mobile phone terminals for communications thereof is, the less the number of times the antenna switch performs switching on the current compensation burst signal may be, and the transmission system may be held in a state in which the transmission system is switched to be coupled to the antenna. When the number of times the antenna switch performs switching on the current compensation burst signal is the smallest, only switching of a transmission slot and a reception slot is performed in the mobile phone terminal.

The number of times the antenna switch performs switching on the current compensation burst signal may be reduced, so that the durability of the antenna switch may be increased and the power consumption in switching operation may be reduced. In addition, consumption of energy of the current compensation burst signal in the dummy load may be reduced, so that heat generation in the dummy load may be reduced, increase in temperature in the mobile phone terminal is not caused, and the operation of each component in the mobile phone terminal may be stabilized.

Also, in the second embodiment, if the slot in which the current compensation burst signal is generated is used in any one of the other mobile phone terminals, the current compensation burst signal is not caused to be transmitted to the outside, and therefore, the current compensation burst signal may be caused to be in the same frequency channel as that allocated by the base station. Thus, control of a base station that allocates another frequency, such as a compensation frequency used for reducing interference with the other mobile phone terminals, and the like may be omitted. Then, an influence, such as an increase in capacity of the communication system, and the like, does not occur, control at a base station side may be omitted, and burst noise emitted by the mobile phone terminal may be reduced.

According to each of the above-described embodiments, a configuration in which coils provided in a power amplifier, a power IC, and the like, which generate an inductive magnetic field serving as a generation source of burst noise are not disposed so as to be separated from a transmission coil of a receiver that is influenced by the inductive magnetic field may be allowed. Thus, constraints of coil arrangement in a device may be reduced, and reduction in size of a device, such as a mobile phone terminal and the like, is not hindered.

Although examples in which a mobile phone terminal is used as a communication device have been described in the above-described embodiments, each of the above-described embodiments may be applied to various types of communication devices which use a TDMA communication method in a similar manner. Also, although examples in which a hearing aid is used as a communication device that is interfered by burst noise have been described in the above-described embodiments, application of each of the above-described embodiments is not limited to the hearing aid, but each of the above-described embodiments may be applied to various types of communication devices which perform transmission of a magnetic signal with a mobile phone terminal in a similar manner.

Embodiments of an aspect of the invention include a control method comprising the steps carried out by a controller of a communication device embodying the present invention.

## Claims

1. A communication device configured to work in accordance with a time domain multiple access communication method, the communication device comprising:
a controller configured to perform control of
generating a communication burst signal obtained by allocating a transmission signal in a burst state at a first output level into a first slot allocated in a frame to be transmitted,
generating a current compensation burst signal allocated into a second slot adjacent to the first slot, having a second output level lower than the first output level and including information that is not related to communication of the communication device, and
switching an antenna according to periods of the first slot and the second slot.

2. The communication device according to claim 1, further comprising:
a receiver configured to include a transmission coil to convert a reception signal of voice to a magnetic signal to be transmitted as burst noise.

3. The communication device according to claims 1 or 2, further comprising:
an antenna switch configured to switch the transmission signal between the antenna and a dummy load,
wherein the controller controls the antenna switch so as to transmit the transmission signal to the antenna during a period of the first slot and to the dummy load during a period of the second slot.

4. The communication device according to claim 3,
wherein, when the second slot is vacant slots unused by any one of other devices communicating with the communication device, the controller controls the antenna switch so as to transmit the transmission signal to the antenna during a period of the second slot.

5. The communication device according to any of the preceding claims,
wherein the first output level is determined based on a communication state of communication with a base station,.

6. The communication device according to any of the preceding claims,
wherein presence of the second slot, a number of the second slot, and the second output level are determined based on the first output level.

7. The communication device according to claim 6,
wherein the presence of the second slot, the number of the second slot, and the second output level are determined based on a power state of the communication device.

8. The communication device according to any of the preceding claims,
wherein, when call connection is established, the controller performs control of generating the current compensation burst signal.

9. The communication device according to any one of claims 6 to 8,
wherein the controller performs control of setting the second output level such that a current change on the first slot and a current change on the second slot are close to each other.

10. The communication device according to any of the preceding claims,
wherein the controller performs control of setting a frequency of the communication burst signal and a frequency of the current compensation burst signal to same.

11. The communication device according to claim 7,
wherein, in a case where current compensation burst signals are generated into a plurality of second slots, the controller performs control of setting respective output levels of the current compensation burst signals into the plurality of second slots to gradually reduce as a distance from the first slot increases.

12. The communication device according to any of the preceding claims,
wherein the controller performs control of generating the current compensation burst signal using a preset data code of a combination of codes that are set in advance and are not related to communication.
